Europäisches Patentamt

European Patent Office

Office européen des brevets

(11) Publication number: 0 374 934
A2

# (12) EUROPEAN PATENT APPLICATION

(21) Application number: 89123720.8

(51) Int. Cl.⁵ H04N 1/38, H04N 1/415

(22) Date of filing: 22.12.89

(30) Priority: 23.12.88 JP 325173/88

(43) Date of publication of application:
27.06.90 Bulletin 90/26

(84) Designated Contracting States:
DE FR GB

(71) Applicant: TOYO INK MFG. CO., LTD.
3-13, Kyobashi 2-chome
Chuo-ku Tokyo 104(JP)

(72) Inventor: Imabayashi, Arata Toyo Ink MFG. Co.
Ltd.
3-13, Kyobashi 2-Chome
Chuo-ku Tokyo 104(JP)
Inventor: Matsuo, Masaaki Toyo Ink MFG. Co.
Ltd.
3-13, Kyobashi 2-Chome
Chuo-ku Tokyo 104(JP)

(74) Representative: Reichel, Wolfgang, Dipl.-Ing.
et al
Reichel und Reichel Parkstrasse 13
D-6000 Frankfurt am Main 1(DE)

(54) Method of distinguishing image area and non-image area, opaquing method and opaquing apparatus.

(57) A method of distinguishing non-image areas in the form of defects, stains or the like on a plate-making film or a photographic printing paper from an image area, a method of automatically performing an opaquing operation and an apparatus for carrying out the opaquing method are disclosed. An original image to be inspected is sequentially read from line to line by a scanning/reading device such as a line sensor or the like so that the non-image areas are distinguished from the image area in accordance with a so-called conjunction-method based on continuity of scanned pixels. The distinguished pixels are bundled and outputted to the opaquing apparatus. The opaquing apparatus is operated such that the non-image areas are stopped out in a stopping-out unit using a thermal trasfer tape on which thermally fusible material to be placed on the non-image areas is carried.

F I G. I

# METHOD OF DISTINGUISHING IMAGE AREA AND NON-IMAGE AREA, OPAQUING METHOD AND OPAQUING APPARATUS

## BACKGROUND OF THE INVENTION

### Field of the Invention

The present invention relates to a method of distinguishing image area and non-image areas, and more particularly, to a method of distinguishing non-image areas such as noises in the form of fine pin holes or the like from a normal image area to effectively output the result of distinguishing. Further, the present invention relates to a method and an apparatus for detecting an image area, i.e., a necessary light transmissble part or a necessary light reflecting area and unnecessary parts (non-image areas) on a plate-making film or photographic printing paper and placing stopping-out (opaquing) material on the unnecessary parts to form stopping-out layers with the use of stopping-out means.

### Statement of the Related Art

As a kind of image processing technique, an operation for distinguishing non-image areas from an image area on a film or the like having images formed thereon has been often utilized in many fields such as photographying, printing, medical treating, factory automation, robot controlling and others. For example, in a printing industry, a plate-making operation is performed accompanied by many auxiliary operations such as an operation of stopping out unnecessary light transmissible spots or light reflecting spots (i.e. defective spots on a plate-making film or photographic printing paper) appearing thereon due to stains on a blockcopy layout sheet during an adhering operation, stains on an exposing unit or the like defect, an operation of dividing image depending on the kind of colors and an operation of erasing unnecessary image lines on the plate-making film or photographic printing paper for each color. To accomplish these auxiliary operations, it is required that defective parts are first distinguished from image parts or non-image lines are distinguished from image lines (distinguishing operation) and the defective parts and the non-image lines are then stopped out (stopping-out operation).

A mask sheet process and a corrective liquid coating process have been hitherto known as a process of stopping out unnecessary spots on a plate-making film or photographic printing paper. In detail, the mask sheet process is such that a trasfer paper having a peelable red colored layer of polyethlene terephthalate or the like material formed thereon is cut to a desired shape, the cut transfer papers are adhesively placed on defective spots or unnecessary image parts on a plate-making film or photographic printing paper and the peelable film is removed from the layered structure so that the defective spots or unnecessary image parts are stopped out with the red colored layers. In almost cases, the mask sheet process is achieved by manual operations.

On the other hand, the corrective liquid coating process is such that defective spots or unnecessary image line parts on a plate-making film or photographic printing paper is coated with a stopping-out liquid (corrective liquid) including stopping-out material such as carbon black or the like material in a vehicle so that the defective spots or unnecessary line parts are stopped out using the coated stopping-out material. The corrective liquid coating process is superior to the mask sheet process, because the resultant stopping-out layer has a thickness less than that of the stopping-out layer derived from the mask sheet process. However, the corrective liquid coating process has drawbacks that a stopping-out operation is achieved for fine defective spots only with much difficulties due to necessity for a hair pen to be used for a coating operation and moreover many manhours are required to complete the stopping-out operation.

In this manner, each conventional process requires many manual operations for stopping out unnecessary light transmissible parts or unnecessary light reflecting parts on the plate-making film or photographic printing paper, and a large part of improvement accomplished till now remains within the range of reinforcement of a stopping-out film and arrangement corresponding to a minor part of the stopping-out operation to be performed.

Further, unnecessary spots on a plate-making film or photographic printing paper have been heretofore detected with an operator's naked eyes but such manual detection takes a long period of time and requires well-trained skill. Generally, many of unnecessary spots or parts to be stopped out are existent in the form of pin holes, lines or the like. At the present stage, not only many unnecessary parts are practically existent but also many manhours are required to detect them.

To detect unnecessary light transmissible parts or unnecessary light reflecting parts on the plate-making film or photographic printing paper, a printed matter inspecting apparatus and a printed circuit board inspecting apparatus has been heretofore used. These conventional apparatuses are intended to detect defects or flaws on a printed matter or a printed circuit board by way of the steps of holding a sample representative of each defect as a sample image inputted via a television camera or the like means and stored in electronic (electric) storing means and comparing the inspected defect with a sample defect for each inspection by sequentially scanning an image of each defect.

These conventional apparatuses are disclosed in official gazettes of, e.g. , Japanese Laid-Open Patent Nos. 250,957 1985, 250,958/1985, 12,341/1986, 12,343/1986 and 12,345/1986. The apparatuses have advantageous features that informations for an inspecting operation are set quickly and stably and rational production of printed matters is realized. However, they can not detect unnecessary light transmissible parts or unnecessary light reflecting parts on the plate-making film or photographic printing paper, because there is provided no standard sample for detecting these defects. In other words, the standard sample is merely a blockcopy layout sheet which can not be used for test. Thus, it has been requested to develop an apparatus for opaquing unnecessary parts without necessity for a standard sample.

Further, as disclosed in official gazettes of Japanese Patent Laid-Open Patent Nos. 275,265/1987 and 23,552/1988, an apparatus for automatically perform an opaquing operation has been proposed. In practice, the apparatus requires a standard sample for inspection but an object of the apparatus is to improve the conventional corrective liquid process. Accordingly, it can not be concluded that the apparatus is not necessarily automated or simplified in structure.

## SUMMARY OF THE INVENTION

The present invention has been made with the foregoing background in mind and its object resides in providing a method and an apparatus for stopping out unnecessary light transmissible parts or unnecessary light reflecting parts on a plate-making film or photographic printing paper during a plate-making operation, wherein a distinguishing operation and a stopping-out opaquing operation in connection with the opaquing operation can be automated or mechanized at a high efficiency without occurrence of such a malfunction that a normal image is opaqued as seen in an opaquing operation.

It should be added that the practical structure of an apparatus for automatically performing an opaquing operation is disclosed in the specification of Japanese Patent Application No. 238,567/1988 (filed September 22, 1988).

For this object, the method of distinguishing an image area and a non-image area of the present invetion comprises the steps;

(A) sequentially reading image on an object per one line on which a number of pixels come into line using image scanning/reading means and binarising read image data per pixel,

(B) storing in a line memory a binary value of each pixel which have been read over a predetermined number of lines,

(C) setting a small distinguishing region which is composed of binary values of objective pixel to be distinguished and peripheral pixels stored in said line memory for distinguishing, and distinguishing the image area and non-image area, while displacing each next distinguishing region about next pixel in the main scanning direction, in such a manner that when it is found that binary values of equal to or more than a predetermined number of continuous peripheral pixels containing a pixel to be distinguished take a same binary value 1, respectively, said pixel to be distinguished is regarded as a pixel representative of the necessary image area and when it is found that binary values of more than a predetermined number of continuous peripheral pixels containing a pixel to be distinguished do not take a same binary value 1 or all the pixels take a same binary value 0, respectively, said pixel to be distinguished is regarded as a pixel representative of the unnecessary non-image area,

(D) storing results derived from the preceding step of distinguishing in a result memory,

(E) displacing the small distinguishing region by a distance equal to one new line in the auxiliary scanning direction to set another small distinguishing region, and storing in said line memory a plurality of binary values in the form of 0 and 1 for said one new line to repeat the steps (C) and (D),

(F) storing the binary values stored in said result memory in an output memory,

(G) regarding an outputting region as a nomal image portion, when it is found that a predetermined image area of which number is more than a number preset for each outputting region are existent in the outputting region, and

(H) outputting or processing each outputting region.

Further, the opaquing method of the present invention comprises the steps;

(A) sequentially reading binary values (1 or 0) of pixels arranged in the form of a matrix on a plate-making film or a photographic printing paper per one line by scanning said plate-making film or photographic printing paper using image scanning/reading means,

(B) storing in a line memory a binary value of each pixel which have been read over a predetermined number of lines,

(C) dividing the stored binary values of the pixels scanned over said predetermined number of lines into a plurality of small distinguishing regions, each of said small distinguishing regions being composed of binary values of pixels to be distinguished and peripheral pixels, and distinguishing the non-image area from the image area, while displacing each binary value of the pixel to be distinguished in the main scanning direction, in such a manner that when it is found that binary values of more than a predetermined number of continuous peripheral pixels containing a pixel to be distinguished take a same binary value 1, respectively, said pixel to be distinguished is regarded as a pixel representative of the necessary image area and when it is found that binary values of equal to or more than a predetermined number of continuous peripheral pixels containing a pixel to be distinguished do not take a same binay value 1 or all the pixels take a same binary value 0, respectively, said pixel to be distinguished is regarded as a pixel representative of the unnecessary non-image area,

(D) storing results derived from the preceding step of distinguishing in a result memory,

(E) displacing the small distinguishing region by a distance equal to new one line in the auxiliary scanning direction to set another small distinguishing region, and storing in said line memory a plurality of binary values in the form of 0 and 1 for said new one line to repeat the steps (C) and (D),

(F) storing the binary values stored in said result memory in an output memory, and

(G) regarding an outputting region as a normal image portion, when it is found that a predetermined image area of which number is more than a number preset for each outputting region are existent in the outputting region, whereby the image areas and the non-image areas are distinguished on the plate-making film or photographic printing paper and the areas other than the image areas or the non-image areas are then stopped out in a thermal transfer unit to form a stopping-out layer.

Further the opaquing apparatus of the present invention comprises;
a conveying unit for conveying an object to be opaqued along a conveyance passage,
a detecting unit for detecting areas on said object to be opaqued, and
a stopping-out unit for feeding stopping-out material to said detected areas to be opaqued.

Other object of the present invention will become apparent from the description presented below.

## BRIEF DESCRIPTION OF THE DRAWINGS

The present invention is illustrated in the following drawings in which;

Fig. 1 is an explanatory view schematically illustrating a series of steps of distinguishing.

Fig. 2 is a flowchart which illustrates a plurality of steps of reading and inputting an image.

Fig. 3 is a flowchart which illustrates a plurality of steps of performing arithmetic processings in accordance with a so-called conjunction method.

Fig. 4 is a flowchart which illustrating a plurality of steps of outputting (bundling).

Fig. 5 is an explanatory view illustrating the content stored in each memory in a distinguishing unit.

Fig. 6 is a block diagram which schematically illustrates a structure of the distinguishing unit.

Fig. 7 is a schematic sectional view illustrating an opaquing apparatus in accordance with an embodiment of the present invention.

Fig. 8 is a fragmentary enlarged side view, particularly illustrating a thermal trasfer section in the opaquing apparatus.

## DESCRIPTION OF THE PREFERRED EMBODIMENTS

Now, the present invention will be described in detail hereinafter with reference to the accompanying drawings which illustrate a method of distinguishing an image area and a non-image area from an image area as well as a method and an apparatus for opaquing the non-image area in accordance with a preferred embodiment thereof.

First, description will be made below as to the method of distinguishing the image area and the non-image area.

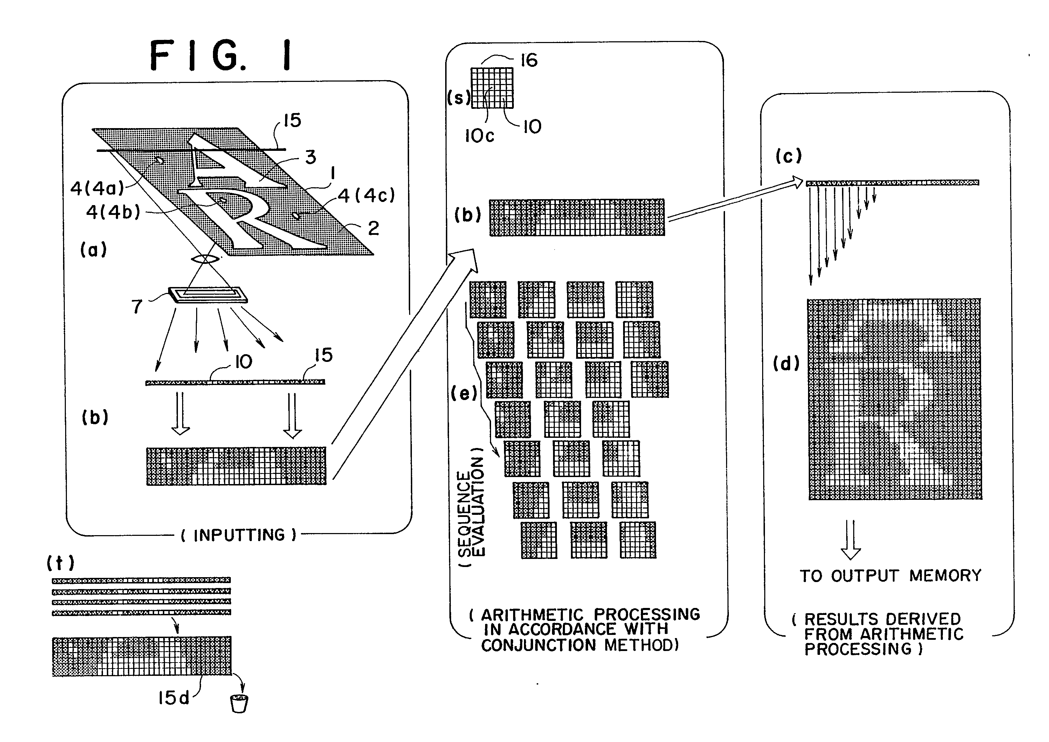

In Fig. 1, reference numeral 1 designates an original film. As is apparent from the drawing, the original film 1 includes an image area 3 (comprising two characters in the shown case) and a plurality of non-image area( spots ) 4 on a plate-making nega type film 2.

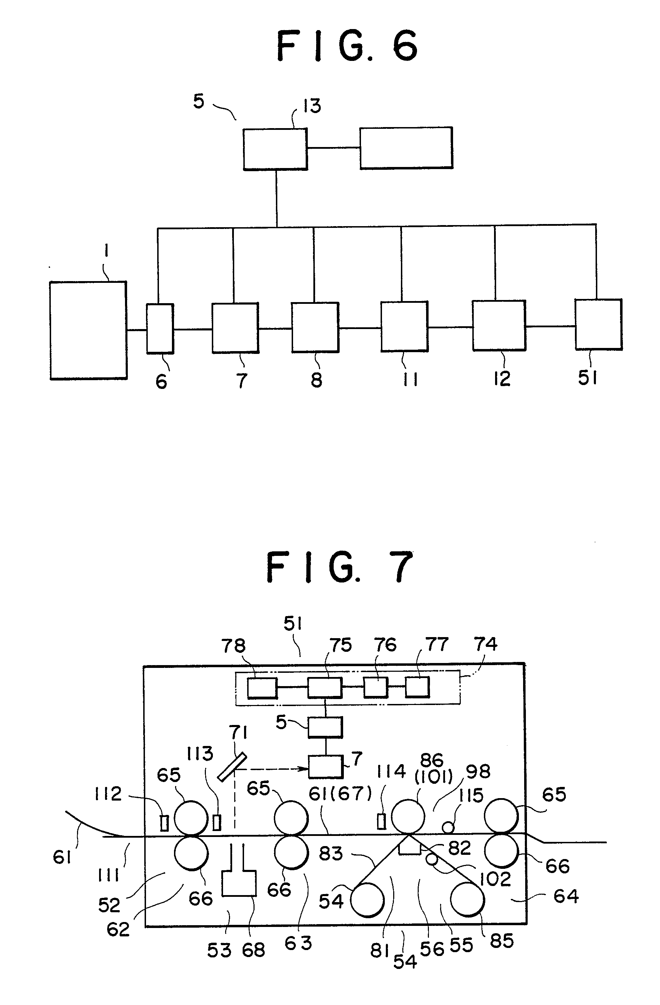

In the shown case, the image area 3 is represented by characters "AR" and three defect areas 4 are existent at 4a, 4b and 4c on the film 2. In practice, each defect area 4 is caused in the form of a defect or created by a stain on the blockcopy layout sheet. To provide a complete original film which is entirely free from such the defect area 4, the latter should be distinguished from the image area 3 and stopped out using stopping-out means. Here, Fig. 6 is a block diagram which schematically illustrates by way of examle an apparatus for distinguishing an image area and a non-image area.

In detail, the apparatus 5 includes an optical system 6, image reading scanning means 7, a line memory 8, a result memory 11, an output memory 12 and a processor 13 as essential structural components. The processor 13 processes signals inputted from each memory and outputs control signals to an opaquing unit 51. Usually, a line sensor is employed for the image reading scanning means 7. For the purpose of simplification of description, the image reading scanning means 7 is hereinafter referred to as a line sensor.

Referring to Fig. 1 again, a number of image data on the original film 1 is sequentially read by the line sensor 7 from line to line (see Fig. 1(a)). Here, a line represents a array of pixels as seen in the main scanning direction. In Fig. 1(a), reference numeral 15 designates a line.

Each pixel 10 on the line 15 is evaluated by way of the following steps.

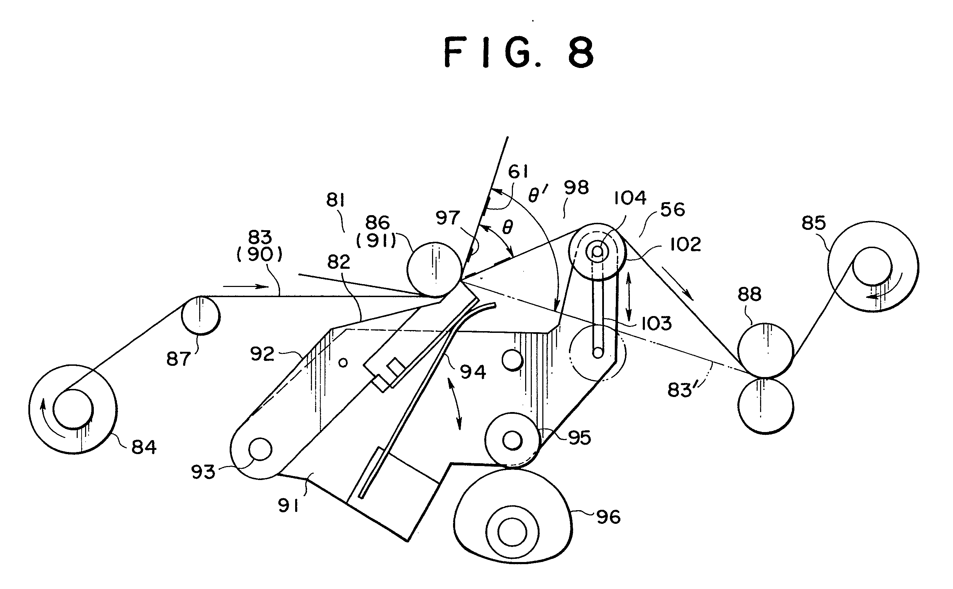

(1) First, a plurality of binary data representing a predetermined number of lines arranged adjacent to each other (7 lines in the case shown in Fig. 1) are stored in the line memory 8 (see Fig. 8-(b)).

(2) A small-sized evaluation section 16 (hereinafter referred to as an evaluation window 16) comprising an objective pixel to be evaluated and a plurality of peripheral pixels included in the evaluation window 16 is provided. In the shown case, the evaluation window 16 comprises a group of pixels in the form of a 7 x 7 matrix (see Fig. 1(s)).

(3) Each pixel 10c in the evaluation window 16 is evaluated in accordance with a so-called conjunction-mothod (see Fig. 1(c)). Specifically, when it is found that image data stored in the line memory 8 includes a plurality of positive pixels including the objective pixel 10c of which number is larger than a preset one and these positive pixels are continuously connected to each other, the processor 13 determines that the objective pixels 10c represents a pixel of an image and a result derived from the evaluation is identified by "positive". Otherwise, the pixel 10c is regarded as a pixel of a non-image area or a noise and a result derived from the evaluation is identified as "negative".

(4) These results derived by evaluations are stored in an one-to-one relationship for each evaluated pixel in a result memory 11 which is provided separately from the line memory 8 (see Fig. 1(d)).

(5) Next, the evaluation window 16 is displaced by a distance equal to one pixel in the main scanning direction and the resultant new group of pixels including new objective pixel adjacent to the foregoing evaluated pixel adjacent to the foregoing evaluated pixel are evaluated in the same manner as described in the preceding paragraphs (3) and (4).

All pixels on the objective lines are sequentially evaluated by repeating the steps (3) to (5) using the line sensor 7 to read image date on the new line, and then the image data are additionally stored in the line memory 8. At this moment, the oldest line data 15d which have been already evaluated are erased from the line memory 8 (see Fig. 1(t)). Next a line spaced away from the preceding evaluated line by one pixel is processed in the same manner as mentioned above by using the line data which have been additionally inputted in the line memory 8 (see Fig. 1 (e)).

Results derived from the above-described evaluation, i.e., the content of the result memory 11 are seqentially inputted into an output memory 12 (memory of which resolution may lower than that of the input section and the result memory). Here, it is assumed that a m x n matrix comprising a number of inputted pixels corresponds to a single output memory.

Although, here, it is assumed that a number of inputted pixel correspond to a single output memory, single inputted pixel may corresponds to a single output memory.

But bundling results derived from the above-descrived evaluation in out- but memory 12, it becomes capable that stopping-out layer does not overlap on the necessary image area. Particularly it is useful to prevent that stopping-out layer overlaps on the necessary image area in the case that all areas other than necessary image area are stopped-out by the stopping-out layer.

A logic sum derived from evaluatied pixels of the m x n matrix in the result memory 11 is stored in each memory element of the output memory 12.

Finally, when it is found that the content stored in the output memory 12, i.e., the logic sum stored in the output memory 12 is positive, this is regarded as an image area. However, when it is found that it is negative (i.e., all the results derived from evaluation of the m x n matrix are negative), this is regarded as a non-image area or a noise. Thereafter, a series of processings (a processing of opaquing and others) are executed.

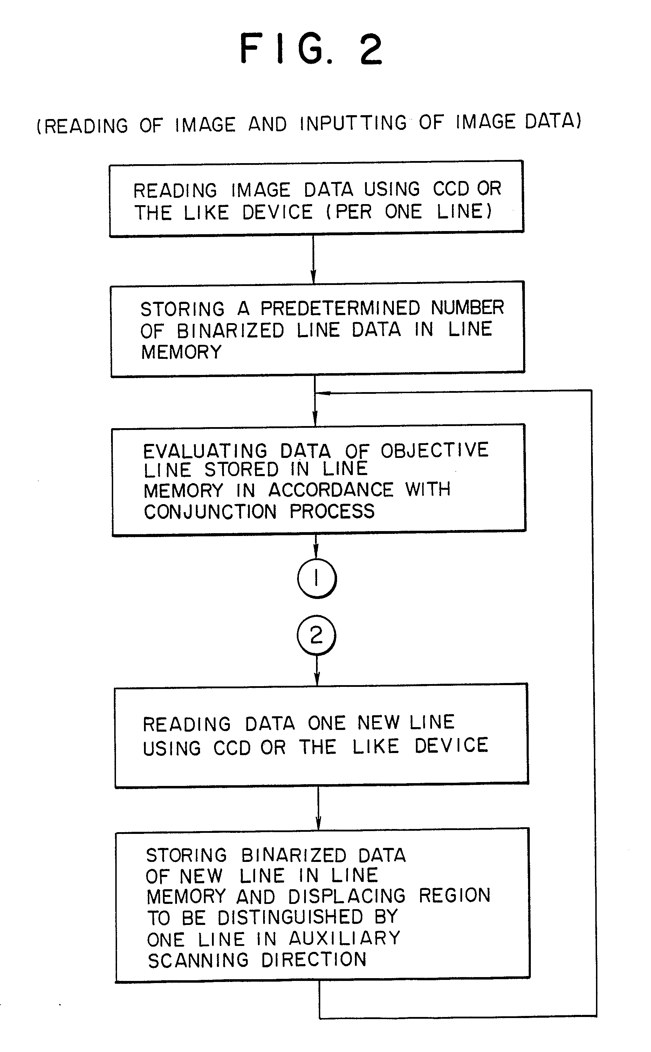

Figs. 2, 3 and 4 are a flowchart, respectively, which illustrate the above-described series of processings.

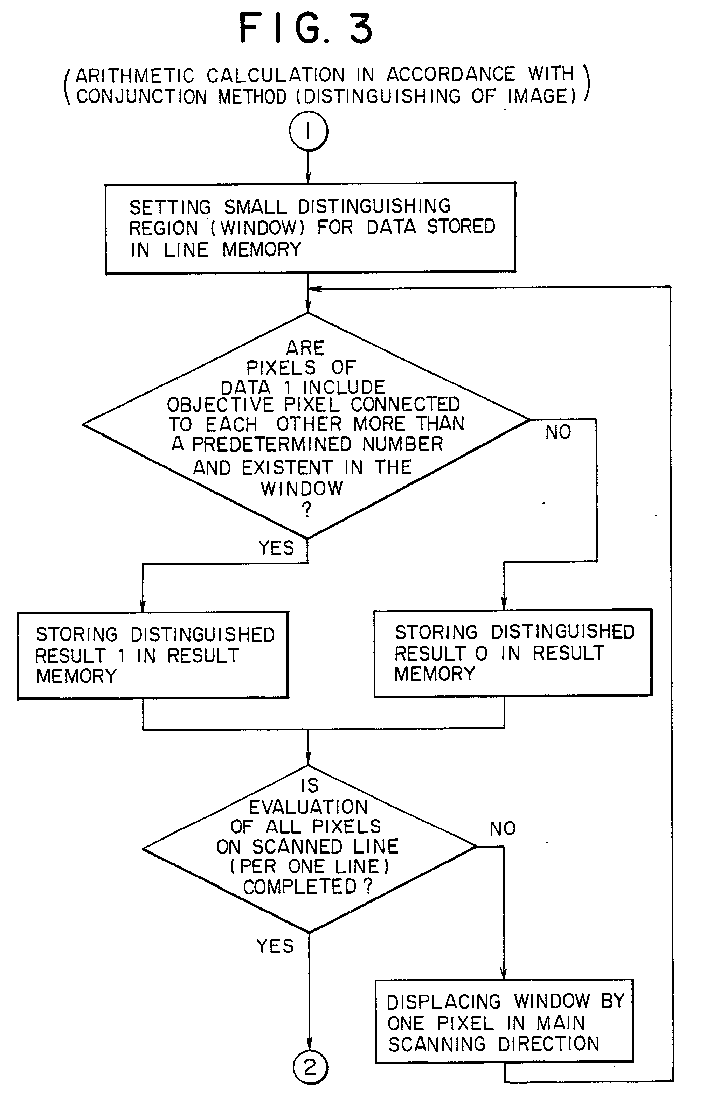

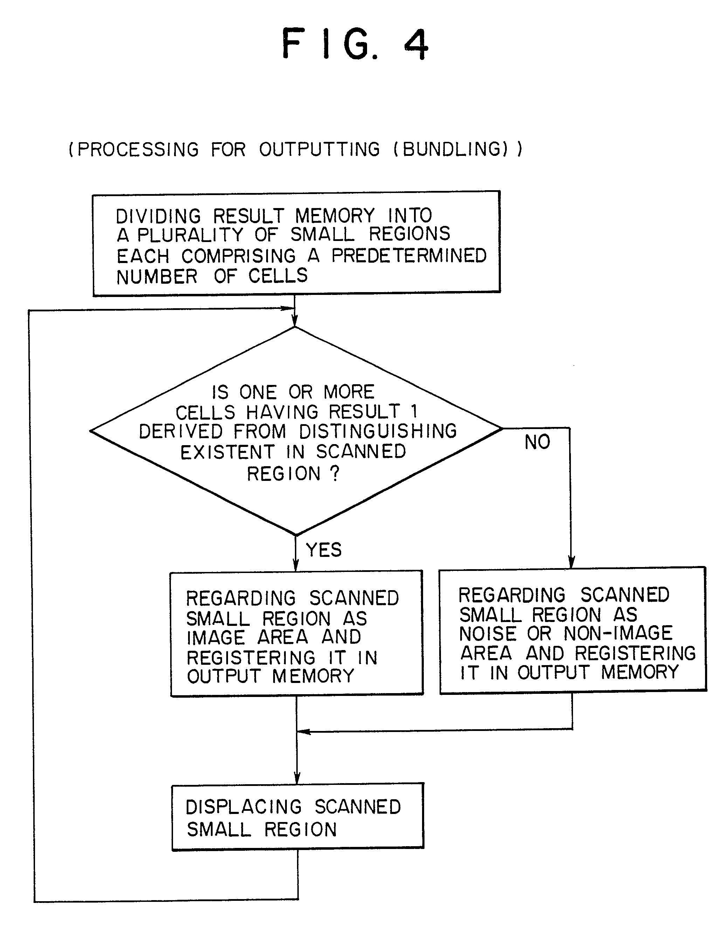

In detail, Fig. 2 is a flowchart which illustrate a step of reading an image on the original film 1 and a step of inputting the read data into the line memory, Fig. 3 is a flowchart which illustrate a series of arithmetic processings for distinguishing the image in accordance with the conjunction process and Fig. 4 is a flowchart which illustrates a processing of outputting (bundling).

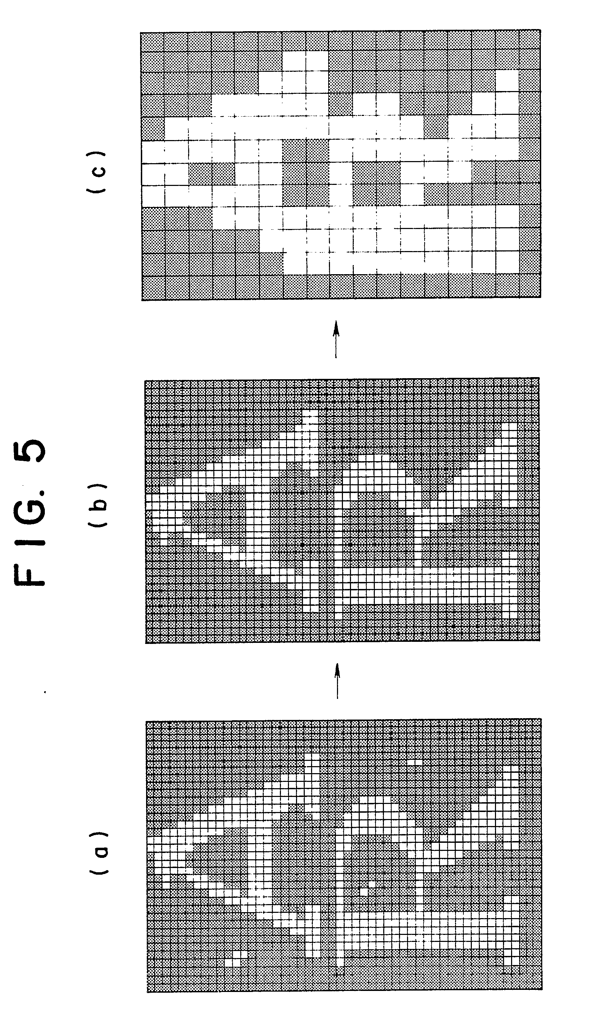

The image data read and binarized by the line sensor 7 during the step of processing as illustrated in Fig. 1(b) is shown in Fig. 5(a), the image stored in the result memory 11 with a fine noise such as pin hole or the like removed as a result derived from the step of processing illustrated in Fig. 1 (d) is shown in Fig. 5(b) and the image temporarily held in the output memory 12 is shown in Fig. 5(c).

Next, an opaquing apparatus will be described below.

In Figs. 7 and 8, reference numeral 51 designates an opaquing apparatus. The opaquing apparatus 51 includes a conveying unit 52, a detecting unit 53, a stopping-out device 54 and a peeling unit 55. The peeling unit 56 includes a peeling angle adjusting unit 56.

The conveying unit 52 comprises three pairs of rollers 62, 63 and 64 which are arranged along the passage 67 of an object 61. Each of the pairs of rollers 62, 63 and 64 comprises a roller 65 driven by a pulse motor or the like means and an opposing roller 66 to convey the object 61 while forming a plurality of nips in cooperation with the roller 65. It should be noted that a driving power source for the pairs of rollers 62, 63 and 64 in the conveying unit 52 should not be limited only to a pulse motor. Alternatively, they may be driven by an electric motor for which a rotary encoder is utilized.

The detecting unit 53 includes an exposing unit 68. The exposing unit 68 is located on one side of the passage 67 for the object 61, and a light passage changing mirror 71 and the line sensor 7 are arranged on other side of the passage 67 for the object 61. After light beam emitted from the exposing unit 68 pass through the object 61, it is reflected at the light passage changing mirror 71 and the reflected light beam is introduced into the line sensor7.

In addition to a plate-making film, a negative or positive monochromatic film, a negative or positive color film, a photographic printing paper, a blockcopy layout sheet or the like can be exemplified as an object 61 in the form of a sheet or film to which the present invention is applied.

It suffices that the exposing unit 68 is constructed such that light exposing is effected with a requied accuracy and thereby informations can be obtained as a result of light exposing. For example, the exposing unit 68 is constructed such that light exposing is achieved with a slit formed between the light source and the object or exposing is achieved by light beam having a required width emitted from the light source with an excellent degree of sharpness. Accordingly, particular limitation is not placed on the exposing unit 68, if it is proven that the exposing unit 68 can emit light beam which in turn can be received by the line sensor 7. For example, an array of LEDs, a tungsten lamp, a fluorescent lamp, a xenon lamp or the like are available for the exposing unit 68.

Various kinds of line sensors 7 are usually used. For example, a CCD close contact type image sensor, a CCD camera, a photo-multiplier, a photo-conductive type photographing tube, e.g., a visicon, a photo-diode, a photo-transistor, a photo cell or the like are available for the line sensor 7.

When detection is carried out by the line sensor 7, a suitable type of enlarging or reducing lens system can be utilized so as to improve an ability of detecting and simplify the unit itself, as desired. This arrangement makes it possible to variously determine a resolution of the line sensor, i.e., an accuracy of detecting a necessary part by properly combining the line sensor with an available lens system. A number of pixels on the plate-making film or the like may be detected by using a single line sensor or a area sensor. Further, the line sensor or line sensors may be displaceable so as to receive passed light or reflected light. Operation of the line sensor 7 is controlled by a detecting controller. An output from the line sensor 7 is inputted into the line memory 8 of the distinguishing unit 5. An output from the distinguishing unit 5 is inputted into a controlling unit 74. Specifically, the controlling unit 74 comprises a central processing unit 75 (hereinafter referred to as CPU), a storing unit 76, an auxiliary storing unit 77 and an inputting unit 78.

Each of the storing unit 76 and the auxiliary storing unit 77 is provided in the form of a memory in which an information derived from the distinguishing unit 5 is stored with respect to a required area of the object and with which reading/writing can be performed.

The storing unit 76 is such that storing is synchronized with to the distinguishing unit 5 and other units and reading is synchronized with the stopping-out unit. Further, data which are read from the storing unit 76 with a timing of operation of the stopping-out unit is converted into control signals to be fed to the head of a thermal printer, i.e., a typical example of the stopping-out unit. A temperature of the thermal head is properly controlled by controlling a width of each pulse.

Any particular restriction is not given to the inputting unit 78, provided that a size of each pixel can be inputted into the inputting unit 78. Normally, a key board is available for the inputting unit 78.

The image area or the unnecessary area on the object is detected in accordance with the aforementioned distinguishing process.

To perform a stopping-out operation based on positional informations, a thermal transfer printer 81 is available for the stopping-out unit 54. As shown in Fig. 8, the thermal transfer printer 81 includes a thermal head 82 and a thermal transfer tape 83 as essential components so that it gives instructions to the thermal head 82 of the thermal transfer printer 81 based on the positional informations to form a stopping-out layer 97. Namely, the thermal head 81 is operated such that stopping-out material is transferred from the thermal transfer tape 83 having the stopping-out material carried thereon to the object 61 to place on the object 61 the stopping-out layer 97. In Fig. 8, reference numeral 84 designates an unwinding roller which serves to feed the thermal transfer tape 83 and reference numeral 85 designates a winding roller which serves to wind the used thermal transfer tape 83. A roller 86 is a structural component for the conveying unit 52 and serves also as a platen for the thermal transfer printer 81.

The thermal transfer tape 83 is such that a thermally transferrable material including as components pigment or dyestuff and thermally fusible film forming material to be thermally transferrable at a temperature in the range of 50 to 130 $^\circ$C is placed on a substrate. The pignment or dyestuff has properties of sufficiently satisfying a plurality of stopping-out conditions during an exposing operation which is one of later steps at which the plate-making film or photographic printing paper is used. Wax or the like material can be used as thermally fusible film forming material.

A passage 90 for the thermal transfer tape 83 is provided between the unwinding roller 84 and the winding roller 85, and a back-tension roller 87, the thermal transfer printer 81 and a pair of conveying rollers 88 are arranged along the passage 90.

The thermal transfer printer 81 includes a holder 91 on which a thermal head fitting frame 92 is mounted to turn about a shaft 93.

The thermal head 82 is firmly attached to the top end of the thermal head fitting frame 92. The holder 91 includes a leaf spring 94 for thrusting the thermal head 92 toward the platen roller 86 under the effect of resilient force of the leaf spring 94. Further, the holder 91 is provided with a cam follower 95 which normally comes in contact with a cam 96. With this arrangement, as the cam 96 is rotated, the holder 91 turns about the shaft 93 to move near to or away from the platen roller 86.

The object 61 and the thermal transfer tape 83 are fed to the inlet side of the platen roller 86 in a superposed state. As the thermal head 82 is heated in response to the positional informations, the thermal transfer material on the thermal transfer tape 83 is thermally fused and transferred on an area other than the image area or an unnecessary area to form the stopping-out layer 97. It is preferable that the stopping-out layer 97 has a property of resistance required under the working environment to which the plate-making film is exposed after the stopping-out layer 97 is transferred to the unnecessary area. Thus, the stopping-out layer 97 well matching with the working environment should be selected. The thermal transfer tape 83 is peeled away from the object 61 by a peeling unit 98 on the outlet side of the platen roller 86.

The peeling unit 98 comprises a film guide roller 91 and a thermal transfer tape guide roller 102. The film guide roller 91 guides movement of the object 61 to determine the direction of movement thereof and the thermal transfer tape guide roller 102 guides movement of the used thermal transfer tape 83. In the shown embodiment, the platen roller 86 serves also as a film guide roller 91.

An angle of $\theta$ formed between the object 61 and the thermal transfer tape 83 on the outlet side of the platen roller 86 (the film guide roller 91) is called a peeling angle. How much this angle of $\theta$ affects a quality of opaquing will be apparent from the above description. The peeling angle $\theta$ is adjusted by a peeling angle adjusting unit 56. The peeling angle adjusting unit 56 is constructed such that an elongated hole 103 is formed on the holder 91, a shaft 104 of the thermal transfer tape guide roller 102 is displaceably inserted through the elongated hole 103 and a position of the shaft 104 as seen in the lognitudinal direction of the elongated hole 103 is adjustably selected to vary the position of the thermal transfer tape guide roller 102, whereby the peeling angle $\theta$ can be adjusted as required.

Adjustment of the peeling angle may be achieved by means of adjustably varying the position of a roller adapted to come in contact with the object or by means of adjustably varying the position of a roller adapted to come in contact with the thermal transfer tape or by a combination of the above-described two means. With respect to the adjustment of the peeling angle, it is necessary that the peeling angle can be adjusted within the range of 10 to 90 degrees, preferably, within the range of 20 to 60 degrees. It is preferable that adjustment can be made by way of plural step, e.g., every one degree, every 5 degrees or every ten degrees.

Such adjustment of the peeling angle makes it possible to meet requirements for changing the kind of thermal transfer material and changing the kind of an object.

After thermal transferring is achieved with the thermal transfer tape 83, an electrically conductive roller 115 serving as static electricity removing means is brought in contact with the object 61 at the same speed as that of movement of the thermal transfer tape 83 so that static electricity is removed from the object 61. It should be noted that a plurality of detectors 112, 113 and 114 are disposed on the inlet side and the outlet side of the pair of rollers 62 and on the inlet side of the thermal transfer printer 81. The detectors 112, 113 and 114 are intended to detect the object 61, and each of the detectors 112, 113 and 114 is constructed in the form of means comprising the combination of a small light source and a photo-transistor so as to allow the object to prevent light beam from passing through the object, means of refflective type sensor, means of allowing a microswitch to come in contact with the object to actuate the microswitch or means of pushing up the object with a roller to actuate a microswitch.

Next, operation of the opaquing apparatus 1 as constructed in the above-described manner will be described below.

The object 61 in the form of a plate-making film is fed to an inlet 111 of the opaquing apparatus 1. As the object 61 is introduced into the interior of the opaquing apparatus 1 via the inlet 111, it is detected by the detector 112 and then the coveying unit 52 starts a conveying operation. Normally, the conveying unit 62 is driven after electrical power is supplied but it is preferable that a conveying operation is started only after the object 61 is inserted into the inlet 111. Conveyance of the object 61 is continuously detected by the detector 113 which generates a signal serving as a reference for determining the position of the object 61 for subsequent operation. In the shown embodiment, two detectors 112 and 113 are used. Alternatively, a single detector may be substituted for a combination of the two detectos to provide same functions. Detection of the detector 113 is intended for positional determination. An information on starting of the detection is used as a reference for an information on positions where subsequent light exposing, light receiving and detecting are carried out. Incidentally, detection may be effected depending on a mark previously formed on the object to indicate a reference position.

The object 61 which has been conveyed in that way is exposed to light beam in the exposing unit 68 of the detecting unit 53. The exposing unit 68 comprises a light source and a slit on necessity.

Light coming from the object 61 is introduced into the line sensor 7. It should be noted that passed light is shown in Fig. 6 but reflected light may of course be used.

After the object 61 passes through the exposing unit 68, it is then detected by the detector 114 located before the stopping-out unit 54. This detection is used as a reference for determining the position where stopping-out is carried out.

Thus, in response to detection of the detector 113, the position on the detected image is automatically determined based on the distance of conveyance or the conveying speed. This makes it possible that the detector 113 derives a distance from the start point. The thus derived positional information is stored in the processor 13 so that stopping-out is carried out without necessity for previous position determining, by utilizing the stored positional informations and the coordinate informations on the object 61 inputted into the stopping-out unit 54 from the detector 113. In addition, the detector 114 located before the stopping-out unit 54 detects also the object 61 so that stopping-out can automatically be carried out depending on the reference information and the detected positional informations. It should be noted that a distance between the detector 113 and the exposing unit 68 is not always required to be equal to a distance between the detector 114 and the stopping-out unit 54. The CPU 75 carries out these calculations and processings and results derived from them are stored in the storing unit 76 and the auxiliary storing unit 77. The exposing unit 68 is operated in response to an instruction issued from the inputting unit 78 via the CPU 75, based on a size inputted into the CPU 75 from the inputting unit 78 and the detected pitch. Image informations on the object 61, i.e., informations from the detecting unit 53 are seqentially stored in the storing unit 76 which is controlled under the CPU 75. Incidentally, to practice the present invention, the CPU 75 is not always essential. Alternatively, the present invention may be practiced without the CPU 75.

Referring to Fig. 7 again, the detector 114 may be removed from the opaquing apparatus. Namely, the position where the stopping-out layer 97 is formed on the object 61 can be determined based on the distance between the detector 113 and the stopping-out unit 54 as well as the conveying speed. Positional informations on the image area and the non-image areas which have been determined based on image informations on the object 61 inputted from the detector 113 are stored in the auxiliary storing unit 77 for a predetermined period of time (representing a period of time that elapses until image informations corresponding to the object reach the stopping-out unit 54) and thereafter the stopping-out layer 97 can be formed on the object 61 at a required position thereon without necessity for previous locating, by sequentially issuing instructions to the stopping-out unit 54 based on the stored positonal informations.

Referring to Fig. 7, distance between the adjacent rollers as seen in the direction of conveyance, i.e., a distance between the first roller 65 and the second roller 65 and a distance the second roller 65 and the platen roller 86 are determined shorter than a length of the shortest object in order to assure that conveyance is accomplished without fail. Normally, it is necessary that a distance between the adjacent rollers is determined shorter than 15 cm with respect to the opaquing apparatus of the present invention.

Further, according to the present invention, the object 61 which has reached the stopping-out unit 54 is superposed on the thermal transfer tape 83 by actuating the platen roller 61. At this moment, the holder 91 is displaced (it turns in the anticlockwise direction as seen in Fig. 8) as the cam 95 is rotated, and the thermal head 82 is thrusted toward the platen roller 86 under the effect of resilient force of the leaf spring 94. Thus, the superposed structure comprising the thermal transfer tape 83 and the object 61 is clamped between the thermal head 82 and the platen roller 86. The thermal head 82 is arranged at a right angle relative to the direction of conveying. The thermal head 82 is heated depending on results derived from the logical sum of positional informations stored in the auxiliary storing unit 77 and positional informations on the object 61, whereby the thermal transfer material is thermally fused and a stopping-out layer 97 is formed with the fused material on the unnecessary area which has been detected by the detecting unit 53.

After the stopping-out layer 97 is formed in that way, the superposed thermal transfer tape 83 and the object 61 are discharged from the stopping-out unit 54 and enters the peeling unit 55. The object 61 is displaced toward the pair of rollers 64 in the peeling unit 55 with the aid of the film guide roller 115, whereas the thermal transfer tape 83 is displaced toward the winding roller 85 with the aid of the thermal transfer tape guide roller 102. In the manner, the object 61 and the thermal transfer tape 83 are displaced in different directions with a peeling angle of THETA until they are peeled away from each other.

When the peeling angle is to be adjusted, the shaft 104 is displaced along the elongated hole 93 on the holder 91 so that the position assumed by the thermal transfer tape guide roller 102 is changed. This causes the direction of conveyance of the thermal transfer tape 83 to be varied. Consequently, the peeling angle can be changed as required.

As will be readily apparent from the above description, the present invention has provided a method of effectively distinguishing useful image areas and unnecessary non-image areas and opaquing unneccessary non-image areas.
Further, the present invention has provided an opaquing apparatus which assures that unnecessary non-image spots in the form of pin holes or the like defect on a plate-making film can reliably be detected in accordance with the foregoing distinguishing method and the non-image area comprising the unnecessary non-image spots can be stopped out without fail.
Consequently, a plate-making operation (inclusive an opaquing operation) can be performed without necessity for any highly trained skill more easily, quickly and exactly than conventional methods such as a mask sheet process, a corrective liquid coating process or the like.

## Claims

1. A method of distinguishing a non-image area from an image area comprising the steps;
(A) sequentially reading image on an object per one line on which a number of pixels come into line using image scanning/reading means and binarising read image data per pixel,
(B) storing in a line memory a binary value of each pixel which have been read over a predetermined number of lines,
(C) setting a small distinguishing region which is composed of binary values of objective pixel to be distinguished and peripheral pixels stored in said line memory for distinguishing, and distinguishing the image area and non-image area, while displacing each next distinguishing region about next pixel in the main scanning direction, in such a manner that when it is found that binary values of equal to or more than a predetermined number of continuous peripheral pixels containing a pixel to be distinguished take a same binary value 1, respectively, said pixel to be distinguished is regarded as a pixel representative of the necessary image area and when it is found that binary values of more than a predetermined number of continuous peripheral pixels containing a pixel to be distinguished do not take a same binary value 1 or all the pixels take a same binary value 0, respectively, said pixel to be distinguished is regarded as a pixel representative of the unnecessary non-image area,
(D) storing results derived from the preceding step of distinguishing in a result memory,
(E) displacing the small distinguishing region by a distance equal to one new line in the auxiliary scanning direction to set another small distinguishing region, and storing in said line memory a plurality of binary values in the form of 0 and 1 for said one new line to repeat the steps (C) and (D),
(F) storing the binary values stored in said result memory in an output memory,
(G) regarding an outputting region, as a nomal image portion, when it is found that a predetermined image area of which number is more than a number preset for each outputting region are existent in the outputting region, and
(H) outputting or processing each outputting region.
2. The method as claim in claim 1, wherein each small distinguishing region is provided in the form of a 7 x 7 matrix.
3. The method as claimed in claim 1 or 2, wherein the step (H) of outputting or processing is performed in an image forming unit.

4. An opaquing method comprising the steps;

(A) sequentially reading binary values (1 or 0) of pixels arranged in the form of a matrix on a plate-making film or a photographic printing paper per one line by scanning said plate-making film or photographic printing paper using image scanning reading means,

(B) storing in a line memory a binary value of each pixel which have been read over a predetermined number of lines,

(C) dividing the stored binary values of the pixels scanned over said predetermined number of lines into a plurality of small distinguishing regions, each of said small distinguishing regions being composed of binary values of pixels to be distinguished and peripheral pixels, and distinguishing the non-image area from the image area, while displacing each binary value of the pixel to be distinguished in the main scanning direction, in such a manner that when it is found that binary values of more than a predetermined number of continuous peripheral pixels containing a pixel to be distinguished take a same binary value 1, respectively, said pixel to be distinguished is regarded as a pixel representative of the necessary image area and when it is found that binary values of equal to or more than a predetermined number of continuous peripheral pixels containing a pixel to be distinguished do not take a same binay value 1 or all the pixels take a same binary value 0, respectively, said pixel to be distinguished is regarded as a pixel representative of the unnecessary non-image area,

(D) storing results derived from the preceding step of distinguishing in a result memory,

(E) displacing the small distinguishing region by a distance equal to new one line in the auxiliary scanning direction to set another small distinguishing region, and storing in said line memory a plurality of binary values in the form of 0 and 1 for said new one line to repeat the steps (C) and (D),

(F) storing the binary values stored in said result memory in an output memory, and

(G) regarding an outputting region as a normal image portion, when it is found that a predetermined image area of which number is more than a number preset for each outputting region are existent in the outputting region, whereby the image areas and the non-image areas are distinguished on the plate-making film or photographic printing paper and the areas other than the image areas or the non-image areas are then stopped out in a thermal transfer unit to form a stopping-out layer.

5. An opaquing apparatus comprising;
a conveying unit for conveying an object to be opaqued along a conveyance passage,

a detecting unit for detecting areas on said object to be opaqued, and
an stopping-out unit for feeding stopping-out material to said detected areas to be opaqued.

6. The opaquing apparatus as claimed in claim 5, wherein said detecting unit includes an exposing unit for exposing the object to be opaqued to light beam and a line sensor for scanning the surface of the object to be opaqued.

7. The opaquing apparatus as claimed in claim 5, wherein said stopping-out unit includes a platen roller and a thermal head midway of said conveyance passage with a thermal transfer section interposed between said platen roller and said thermal head, wherein said stopping-out unit further includes a thermal transfer tape feeding unit for feeding to said thermal transfer section a thermal transfer tape comprising a thermally fusible material and a carrier in the form of a tape on which said thermally fusible material is carried and a peeling unit for peeling the thermal transfer tape from the opaques object on the outlet side of the thermal transfer section after the thermally fusible material is transferred onto the object to be opaqued, said peeling being achieved by allowing the thermal trasfer tape with the thermally fusible material removed therefrom to be conveyed along a conveyance passage which extends in a different direction from that of the conveyance passage for the opaqued object and wherein said stopping-out unit further includes a holder adapted to turn about a shaft, a position controlling unit for displacing said holder to a required position, a frame secured to said thermal head so as to allow said holder to turn about said shaft and spring means for biasing said thermal head toward said platen roller under the effect of resilient force of said spring.

8. The opaquing apparatus as claimed in claim 7, wherein said peeling unit includes a peeling angle adjusting unit for adjustably varying an angle of said conveyance passage for the thermal transfer tape with the thermally fusible material removed therefrom, said peeling angle adjusting unit including a guide roller to determine an angle of the conveyance passage for the thermal transfer tape with thermally fusible material removed therefrom, said guide roller being supported to adjustably vary the position of the holder.

# F I G. I

(a)

4(4a)
4(4b)
4(4c)

15
3
1
2

7

10
15

(b)

( INPUTTING )

(t)

15d

(s)

16
10c
10

(b)

(e)

( SEQUENCE EVALUATION )

( ARITHMETIC PROCESSING IN ACCORDANCE WITH CONJUNCTION METHOD)

(c)

(d)

TO OUTPUT MEMORY

( RESULTS DERIVED FROM ARITHMETIC PROCESSING )

EP 0 374 934 A2

# F I G. 2

(READING OF IMAGE AND INPUTTING OF IMAGE DATA)

```
┌─────────────────────────────────────┐
│ READING IMAGE DATA USING CCD OR      │
│ THE LIKE DEVICE (PER ONE LINE)       │
└─────────────────────────────────────┘
                  │
                  ▼
┌─────────────────────────────────────┐
│ STORING A PREDETERMINED NUMBER       │
│ OF BINARIZED LINE DATA IN LINE       │
│ MEMORY                               │
└─────────────────────────────────────┘
                  │
                  ▼
┌─────────────────────────────────────┐
│ EVALUATING DATA OF OBJECTIVE         │
│ LINE STORED IN LINE                  │
│ MEMORY IN ACCORDANCE WITH            │
│ CONJUNCTION PROCESS                  │
└─────────────────────────────────────┘
                  │
                  ▼
                 ( 1 )
                  │
                 ( 2 )
                  │
                  ▼
┌─────────────────────────────────────┐
│ READING DATA ONE NEW LINE            │
│ USING CCD OR THE LIKE DEVICE         │
└─────────────────────────────────────┘
                  │
                  ▼
┌─────────────────────────────────────┐
│ STORING BINARIZED DATA               │
│ OF NEW LINE IN LINE                  │
│ MEMORY AND DISPLACING REGION         │
│ TO BE DISTINGUISHED BY               │
│ ONE LINE IN AUXILIARY                │
│ SCANNING DIRECTION                   │
└─────────────────────────────────────┘
```

# FIG. 3

$$\left( \begin{array}{c} \text{ARITHMETIC CALCULATION IN ACCORDANCE WITH} \\ \text{CONJUNCTION METHOD (DISTINGUISHING OF IMAGE)} \end{array} \right)$$

(1)

SETTING SMALL DISTINGUISHING REGION (WINDOW) FOR DATA STORED IN LINE MEMORY

ARE PIXELS OF DATA 1 INCLUDE OBJECTIVE PIXEL CONNECTED TO EACH OTHER MORE THAN A PREDETERMINED NUMBER AND EXISTENT IN THE WINDOW ?

NO

YES

STORING DISTINGUISHED RESULT 1 IN RESULT MEMORY

STORING DISTINGUISHED RESULT 0 IN RESULT MEMORY

IS EVALUATION OF ALL PIXELS ON SCANNED LINE (PER ONE LINE) COMPLETED ?

NO

YES

DISPLACING WINDOW BY ONE PIXEL IN MAIN SCANNING DIRECTION

(2)

EP 0 374 934 A2

# F I G. 4

(PROCESSING FOR OUTPUTTING (BUNDLING))

DIVIDING RESULT MEMORY INTO A PLURALITY OF SMALL REGIONS EACH COMPRISING A PREDETERMINED NUMBER OF CELLS

IS ONE OR MORE CELLS HAVING RESULT 1 DERIVED FROM DISTINGUISHING EXISTENT IN SCANNED REGION ?

NO

YES

REGARDING SCANNED SMALL REGION AS IMAGE AREA AND REGISTERING IT IN OUTPUT MEMORY

REGARDING SCANNED SMALL REGION AS NOISE OR NON-IMAGE AREA AND REGISTERING IT IN OUTPUT MEMORY

DISPLACING SCANNED SMALL REGION

# F I G. 5

(a)                    (b)                    (c)

EP 0 374 934 A2

EP 0 374 934 A2

# FIG. 6

# FIG. 7

# FIG. 8

EP 0 374 934 A2